# EUROPÄISCHE PATENTSCHRIFT

(11) **EP 1 278 299 B1**
(45) Veröffentlichungstag und Bekanntmachung des Hinweises auf die Patenterteilung: **19.09.2018**
(21) Anmeldenummer: 02405559.2
(22) Anmeldetag: 04.07.2002
(51) Int. Cl.: H02P 3/06

(54) **Steuerverfahren und Schaltung zum Abbremsen eines elektronisch kommutierten Elektromotors**
Braking control method and device for an electronically commutated electric motor
Méthode et dispositif de commande pour freiner un moteur électrique à commutation électronique

(30) Priorität: 16.07.2001 DE 10134454
(43) Veröffentlichungstag der Anmeldung: 22.01.2003
(73) Patentinhaber: HILTI Aktiengesellschaft, 9494 Schaan (LI)
(72) Erfinder: Wissmach, Walter, 80637 München (DE); Bauer, Rudolf, 86899 Erpfting bei Landsberg am Lech (DE); Török, Vilmos, 6911 Campione d'Italia (IT)
(74) Vertreter: Hilti Aktiengesellschaft Corporate Intellectual Property

(56) Entgegenhaltungen:
- EP-A- 0 923 191
- EP-A- 1 067 670
- WO-A-90/00832
- DE-A1- 4 333 733
- US-A- 5 220 257
- US-A- 5 235 261
- US-A- 6 008 619

## Beschreibung

Die Erfindung bezeichnet ein Steuerverfahren und eine Schaltung zum Abbremsen eines elektronisch kommutierten Elektromotors, insbesondere eines als Antrieb in Handwerkzeuggeräten verwendeten geschalteten Reluktanzmotors.

In Handwerkzeuggeräten werden elektronisch kommutierte Elektromotore als kleinvolumige Antriebe mit hohen Leistungen verwendet, welche nach dem Ausschalten durch den Nutzer schnell abgebremst werden müssen.

Derartige, bspw. die bürstenlosen Gleichstrommotoren, Permanent-Magnet-Synchronmotoren, Asynchronmotoren und Switched-Reluctance (SR)-Motoren umfassenden, elektronisch kommutierte Elektromotoren bestehen aus einem rotierbar gelagerten Rotor mit mehreren Polen aus permanentmagnetischem oder weichmagnetischem Material und einem Stator mit mehreren Polschuhen und diese mit einem magnetischen Fluss durchsetzende Wicklungen, welche zeitlich während einer Leitungszeit des rotierenden Rotors stromführend mit einer Spannungsquelle über einen Wechselrichter verbunden sind, der über eine, mit zur Bestimmung des Rotorwinkels geeigneten Sensoren verbundene, Steuer- und Regelelektronik eines Mikrocontrollers bezüglich eines Sollwertes geregelt wird.

Durch die Stromrichtung und die Ein- bzw. Ausschaltpunkte während einer Phasenperiodendauer erzeugt eine Leitungszeit entweder ein Antriebs- oder ein Bremsmoment. Bei SR-Motoren ist der Wechselrichter üblicherweise als Halbbrücke ausgebildet, da der Strom sowohl im motorischen als auch im generatorischen Betriebsmode in einer Stromrichtung durch die Wicklung fliesst. Oft ist ein Zwischenkreis zwischen einem netzseitigen Stromrichter und einem lastseitigen Wechselrichter angeordnet, wobei ein Zwischenkreiskondensator zur kurzzeitigen Energiespeicherung dient.

Zum Abbremsen des Rotors wird die Rotationsenergie üblicherweise im Kurzschluss- oder Freilaufmode in Stromwärme im Rotor bzw. Stator umgesetzt oder im Generatormode in den Zwischenkreis bzw. das Stromnetz zurückgespeist bzw. in einem separaten Bremswiderstand in Stromwärme umgesetzt. Nachteilig bei einem schnellen Abbremsen sind sowohl zusätzliche Bauteile in Form des Bremswiderstandes zuzüglich der notwendigen Leistungsschalter und Steuerelektronik als auch unzulässig hohe Betriebsparameter wie Kurzschlussströme in den Wicklungen im Stator oder Magnetfeldstärken im Rotor.

Nach der DE19949804A1 weist ein bürstenloser Gleichstrommotor mit einem permanentmagnetischen Rotor drei winkelversetzte Hall-Sensoren, drei Wicklungen und einem als Vollbrücke mit parallelen Freilaufdioden für drei Brückenzweige ausgebildeten Wechselrichter zwischen dem Stromrichter einen Spannungszwischenkreis mit einem Zwischenkreiskondensator sowie mit einem Strommesswiderstand auf. Über ein im Mikrocontroller beinhaltetes synthetisches Motormodell wird bei variabler Last und Drehzahl derart geregelt, dass die dem Elektromotor zugeführte Gleichspannung in einer vorgegebenen Relation zu der im Elektromotor induzierten Spannung steht und somit der Elektromotor in einer geeigneten Betriebsart betrieben wird. Bei dem zum Abbremsen benutzten generatorischen Betriebsmode ist die möglicherweise auftretende, unzulässig hohe Zwischenkreisspannung, welche zur Schädigung des Wechselrichters oder des Elektromotors führen kann, über einen weiteren Regelkreis begrenzt. Nachteilig bei dieser Lösung ist das im strom- und spannungsseitig begrenzten, generatorischen Betriebsmode sehr geringe Bremsmoment.

Nach der DE4311533A1 unterstützt ein Steuerverfahren für einen bürstenlosen Gleichstrommotor die unterschiedlich priorisierten und teilweise kombinierten Motorfunktionen: Kommutierung; geregelte Taktung; Choppern; Umschaltung motorischer in ungetakteten Generatorbetrieb. Nachteilig bei dieser Lösung mit einem schnellen Abbremsen im Kurzschlussbetrieb ist die möglicherweise auftretende, unzulässig hohe Verlustleitung, welche zur Schädigung des Wechselrichters oder des Elektromotors führen kann.

Nach der EP534761B1 wird in einem Verfahren zum Betrieb eines elektronisch kommutierten SR-Motors dieser bei höheren Drehzahlen in einer Stetigstrombetriebsart betrieben, indem die Schaltzeitpunkte für die Leitungszeit über eine halbe Phasenperiodendauer ausgedehnt und über mehrere Phasenperiodendauern geregelt werden.

Nach der DE3721477 wird zur exakten Regelung der Geschwindigkeit von Bandaufzeichnungsgeräten bei einem elektronisch kommutierten Elektromotor eine Wicklung im motorischen und simultan eine weitere Wicklung im generatorischen Betrieb betrieben, worauf sich deren beide Magnetfelder überlagern. Zum schnellen Abbremsen ist diese Lösung ungeeignet.

Nach der DE19518991 wird in einem Verfahren zum Betrieb eines elektronisch kommutierten Elektromotors innerhalb einer Phasenperiodendauer schnell zwischen einer Kurzschlussbremsung (je genau ein Brückenzweig offen bzw. geschlossen) und einem generatorischen Betrieb (beide Brückenzweige offen) gewechselt, wodurch einerseits der Zwischenkreis mit Spannung versorgt wird und andererseits entweder der Bremsstrom oder alternativ die Zwischenkreisspannung auf ein maximal zulässiges Mass geregelt wird. Nachteilig bei dieser Lösung ist das im strom- und spannungsseitig begrenzten, generatorischen Betriebsmode sehr geringe Bremsmoment.

Des weiteren wird nach der EP534761B1 in einem Verfahren zum Betrieb eines elektronisch kommutierten SR-Motors dieser bei höheren Drehzahlen in einer Stetigstrombetriebsart betrieben, indem die Schaltzeitpunkte für die Leitungszeit über eine halbe Phasenperiodendauer ausgedehnt und über mehrere Phasenperiodendauem geregelt werden.

US 6 008 619 A beschreibt einen Elektromotor, der über eine Pulsweitenmodulation angesteuert wird. Ein Antriebstrom und ein generatorischer Strom werden abwechelnd in den Motor eingespeist. Der generatorische Strom wird durch elektromagnetische Induktion erzeugt und fließt entgegen der Richtung des Antriebstroms. Die Drehgeschwindigkeit des Motors kann durch das Tastverhältnis eingestellt werden.

EP 1 067 670 A zeigt einen Elektromotor, dessen Spulen in drei Phase betrieben wird. In einer Versorgungsphase wird eine der Spulen versorgt, in einer Rücklaufphase werden Anschlüsse der einen Spule auf gleiches Potential gelegt und einem generativen Phase wird Leistung aus dem Motor rückgewonnen.

US 5 235 261 A beschreibt einen Motor mit einer Steuerschaltung, welcher eine Überstrombegrenzung und eine Motorbremse enthält.

Die Aufgabe der Erfindung besteht in der Realisierung eines Verfahrens und einer Schaltung zum Abbremsen eines elektronisch kommutierten Reluktanzmotors ohne zusätzliche Bremseinrichtungen und unzulässig hohe Betriebsparameter.

Die Aufgabe wird durch den Gegenstand von Anspruch 1 gelöst. Vorteilhafte Weiterbildungen ergeben sich aus den Unteransprüchen.

Im wesentlichen wird bei einem Verfahren zum Abbremsen eines elektronisch kommutierten Elektromotors innerhalb einer Phasenperiodendauer der Wechselrichter bezüglich zumindest einer Wicklung sequentiell sowohl in dem motorischen als auch in dem generatorischen Betriebsmode mit von Null verschiedenen Leitungszeiten betrieben, wobei die den Leitungszeiten zugeordneten Antriebs- bzw. Bremsmomente über eine Phasenperiodendauer gemittelt ein resultierendes Bremsmoment erzeugen.

Der in beiden Betriebsmoden sowohl durch den Wechselrichter, als auch durch die Wicklung im Stator fließende Strom verursacht durch Stromwärme sowohl im Wechselrichter, als auch im Elektromotor durch Stromwärme in den Wicklungen und Ummagnetisierungsverluste im Rotor räumlich zugeordnete und somit verteilte Verluste,
welche es innerhalb zulässiger Stromgrenzwerte für Betriebsparameter zu maximieren gilt, um den Elektromotor schnellstmöglich abzubremsen.

Im einzelnen wird in einem Steuerverfahren vom Mikrocontroller und dem mit diesem verbundenen Wechselrichter zum Abbremsen des Elektromotors in einem
- ersten Schritt der Wechsel in den Abbremsmode detektiert, vorteilhaft das Ausschalten durch den Nutzer;
- in einem zweiten Schritt der übliche Motormode, vorteilhaft mit einer Drehzahl- und/oder Momentregelung, beendet und in den Abbremsmode gewechselt;
- welcher in weiteren, sich periodisch wiederholenden Schritten eine erste Leitungszeit mit einem Antriebsmoment sowie zeitlich versetzt dazu eine zweite Leitungszeit mit einem Bremsmoment derart generiert, dass diese über eine Phasenperiodendauer gemittelt ein resultierendes Bremsmoment erzeugen.

Während des Abbremsmodus wird bei höheren Drehzahlen der Reluktanzmotor in einer Stetigstrombetriebsart mit einzelnen Leitungszeiten über eine halbe Phasenperiodendauer betrieben, indem die motorische und generatorische Leitungszeit zeitlich lückenlos aneinander folgen, wodurch das Abbremsverfahren auch bei höheren Drehzahlen einsetzbar ist.

Vorteilhaft wird in üblicher Weise in einer höher priorisierten Regelschleife während des Abbremsmodus die sich durch die Wicklung integral verzögert einstellende Stromstärke innerhalb der Leitungszeit durch eine Strombegrenzung auf einen Stromgrenzwert begrenzt, indem der Leitungszeit unterbrochen wird, wodurch eine zur Schädigung des Wechselrichters oder des Elektromotors unzulässig hohe Stromstärke vermieden wird.

Vorteilhaft wird während der motorischen Leitungszeit und während der generatorischen Leitungszeit ein unterschiedlicher Stromgrenzwert zur Strombegrenzung benutzt, wodurch die über eine Phasenperiodendauer gemittelten zugeordneten Momente durch eine Variation der zugeordneten Stromgrenzwerte als Parameter separat regelbar sind. Weiter vorteilhaft wird nur der, vorteilhaft der motorischen Leitungszeit zugeordnete, betraglich kleine Stromgrenzwert als Parameter benutzt, wodurch stets ein maximal zulässiges Bremsmoment erzeugt wird und sich die Regelung vereinfacht.

Vorteilhaft wird bei Vorhandensein eines Zwischenkreises in einer über der Strombegrenzung priorisierten Regelschleife während des Abbremsmodus die sich durch die Induktion integral verzögert aufbauende Zwischenkreisspannung auf einen zulässigen Spannungsgrenzwert begrenzt, indem innerhalb der generatorischen Leitungszeit durch eine Strombegrenzung auf den als Steuerparameter benutzten Stromgrenzwert über einen, weiter vorteilhaft kontinuierlichen, Spannungsregler die Zwischenkreisspannung begrenzt wird, wodurch eine zur Schädigung des Wechselrichters oder des Elektromotors unzulässig hohe Zwischenkreisspannung vermieden wird.

Vorteilhaft wird der Spannungsregler für die Zwischenkreisspannung zur Steuerung des über eine Phasenperiodendauer gemittelten resultierenden Bremsmoments benutzt, da die Änderung der im Zwischenkreiskondensator über eine Phasenperiodendauer gemittelten Zwischenkreisspannung ein Mass für das Energiegleichgewicht aus entnommener und zurückgespeister Energie ist, wodurch sich das resultierende Bremsmoment einfach über die Höhe des Stromgrenzwertes regeln lässt. Das maximale Bremsmoment wird bei maximaler Differenz der beiden Stromgrenzwerte, zwischen denen hin- und hergeschaltet wird, erzielt.

Die Erfindung wird bezüglich eines vorteilhaften Ausführungsbeispiels näher erläutert mit:
Fig. 1 als Arbeitszyklus-Diagramm
Fig. 2 als Strom-Zeit-Diagramm
Fig. 3 als Ausführungsbeispiel für die prinzipielle Steuer- und Regelschaltung

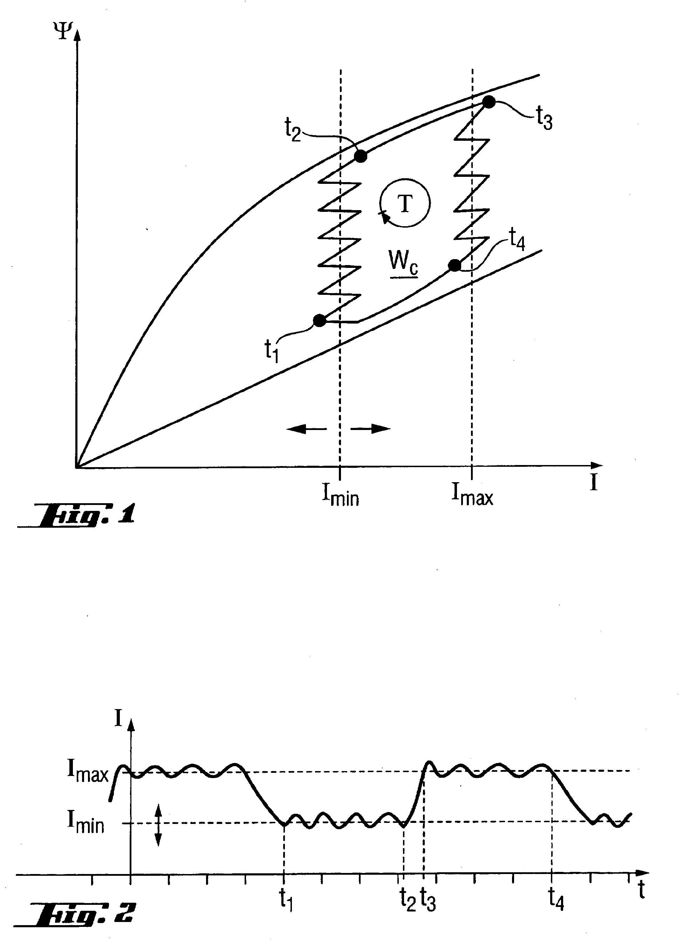

Nach Fig. 1 weist der Arbeitszyklus eines SR-Motors mit einer motorischen Leitungszeit t₁-t₂ und einer generatorischen Leitungszeit t₃-t₄ bezüglich des magnetischen Flusses ψ über dem Strom I durch eine Wicklung während einer Phasenperiodendauer T einen stromlückenlosen, im Uhrzeigersinn durchlaufenen Kreisprozess auf, dessen eingeschlossene Fläche W_{c} ein Mass für die Bremsenergie ist. Die Ein- und Ausschaltzeiten t₁, t₂, t₃, t₄ der Leitungszeit sind vom Mikrocontroller steuerbar bestimmten Rotorwinkellagen zugeordnet. Ein erster, der maximal zulässigen Stromstärke I durch eine Wicklung entsprechende, Stromgrenzwert Iₘₐₓ begrenzt durch Unterbrechungen den Strom in der generatorische Leitungszeit t₃-t₄. Ein zweiter, als Parameter variierter unterer Stromgrenzwert Iₘᵢₙ begrenzt durch Unterbrechungen den Strom in der motorische Leitungszeit t₁-t₂.

Nach Fig. 2 weist das Strom-Zeit-Diagramm bezüglich des Stroms I durch eine Wicklung einen zeitlich lückenlos aneinander folgenden Übergang der motorischen Leitungszeit t₁-t₂ zur generatorischen Leitungszeit t₃-t₄ auf, wobei der Strom I während der generatorischen Leitungszeit t₃-t₄ durch den maximal zulässigen Stromgrenzwert Iₘₐₓ und während der motorischen Leitungszeit t₁-t₂ durch den variierten unteren Stromgrenzwert Iₘᵢₙ begrenzt wird.

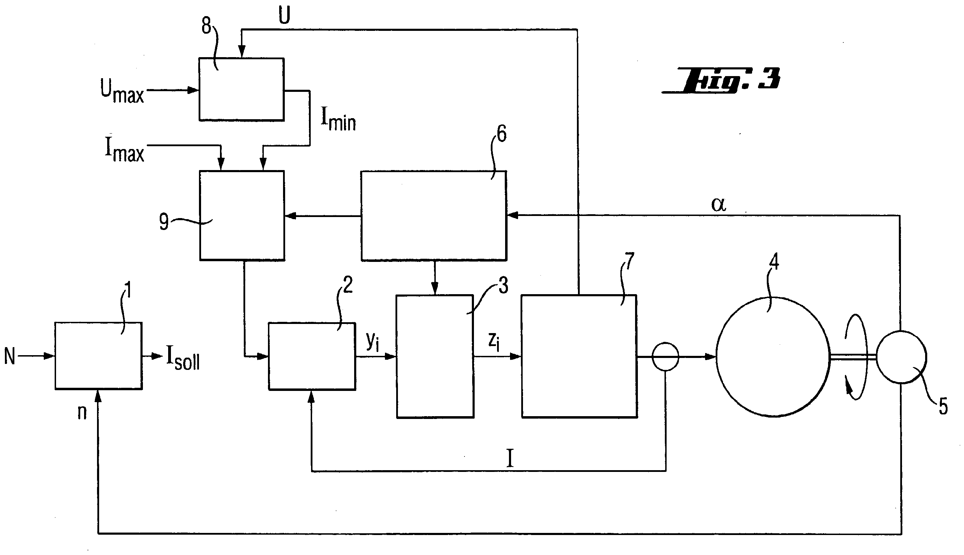

Fig. 3 zeigt eine Prinzipschaltung eines Antriebssystems mit einem elektronisch kommutierten Elektromotor 4. Dieser wird an einem Wechselrichter 7 betrieben, welcher seine Steuerbefehle zᵢ von einer Schaltlogik 3 als Teil eines Mikrocontrollers erhält. Die Schaltlogik 3 wiederum verarbeitet Steuerbefehle, die sie von der übergeordneten Systemsteuerung 6 und von einem Stromregler/-begrenzer 2 erhält. Der Stromregler 2 erfasst den Strom I durch eine Wicklung, vergleicht diesen mit einem von der Systemsteuerung 6 festgelegten Stromgrenzwert Iₘᵢₙ, Iₘₐₓ sowie gegebenenfalls mit einem Stromsollwert Iₛₒₗₗ und leitet daraus gemäß dem implementierten Regelverfahren die entsprechenden Steuerbefehle yᵢ ab. Der Stromsollwert wird von einem überlagerten Drehzahlregler 1 zur Verfügung gestellt, der wiederum den Drehzahlistwert n von einem Drehzahl- bzw. Winkellagegeber 5 und seinen Drehzahlsollwert N beispielsweise von der Systemsteuerung 6 erhält. Die übergeordnete Systemsteuerung 6 erfasst neben anderen hier nicht näher bezeichneten Systemgrößen den Rotorwinkel α und/oder den Drehzahlistwert n des Elektromotors sowie die Zwischenkreisspannung U. Der Rotorwinkel α kann dabei mit guter Näherung aus dem Drehzahlistwert n und der Zeit ermittelt werden und umgekehrt. Diese übliche Prinzipschaltung weist zusätzlich einen oberen ersten Stromgrenzwert Iₘₐₓ für den Strom I durch eine Wicklung einen Spannungsregelkreis zur Begrenzung der Zwischenkreisspannung U auf. Der Spannungsregelkreis besteht aus dem Spannungsregler 8, welcher eine fest vorgegebene maximal zulässige Spannung Uₘₐₓ mit der Zwischenkreisspannung U vergleicht und in Abhängigkeit davon einen zweiten unteren Stromgrenzwert Iₘᵢₙ so generiert, dass Iₘᵢₙ größer wird und gegen den ebenfalls fest vorgegebenen oberen ersten Stromgrenzwert Iₘₐₓ geht, wenn U größer als der Maximalwert Uₘₐₓ wird. Die beiden Stromgrenzwerte Iₘᵢₙ und Iₘₐₓ werden zu einem Umschaltblock 9 geführt, der abhängig von der Ausgangsgröße der Systemsteuerung 6, im Sinne des oben beschriebenen Verfahrens, wechselweise jeweils einen der beiden Stromgrenzwerte Iₘᵢₙ, Iₘₐₓ zum Stromregler 2 übergibt. Während des dargestellten Abbremsens ist der Drehzahlregler 1 außer Betrieb, folglich bleibt die Ausgangsgröße Iₛₒₗₗ unbenutzt, welche im normalen Motorbetrieb mit dem Sollwerteingang des Stromreglers 2 verbunden ist.

## Patentansprüche

1. Steuerverfahren zum Abbremsen eines elektronisch kommutierten Elektromotors (4) mit einem von einem Mikrocontroller gesteuerten Wechselrichter (7), wobei innerhalb einer Phasenperiodendauer (T) der Wechselrichter (7) bezüglich zumindest einer Wicklung sequentiell sowohl in dem motorischen als auch in dem generatorischen Betriebsmode mit von Null verschiedenen Leitungszeiten (t₁-t₂, t₃-t₄) betrieben wird, wobei die den Leitungszeiten (t₁-t₂, t₃-t₄) zugeordneten Antriebs- bzw. Bremsmomente über die Phasenperiodendauer (T) gemittelt ein resultierendes Bremsmoment erzeugen,
**dadurch gekennzeichnet, dass** während des Abbremsmodus bei höheren Drehzahlen der als Reluktanzmotor ausgebildete Elektromotor (4) in einer Stetigstrombetriebsart mit einzelnen Leitungszeiten (t₁-t₂, t₃-t₄) über eine halbe Phasenperiodendauer (T) betrieben wird, indem die motorische und generatorische Leitungszeit (t₁-t₂; t₃-t₄) zeitlich lückenlos aneinander folgen.

2. Steuerverfahren nach Anspruch 1, **dadurch gekennzeichnet, dass** vom Mikrocontroller und dem mit diesem verbundenen Wechselrichter (7) zum Abbremsen des Elektromotors (4) in einem ersten Schritt:
der Wechsel in den Abbremsmode detektiert, optional das Ausschalten durch den Nutzer;
in einem zweiten Schritt:
der übliche Motormode, optional mit einer Drehzahl- und/oder Momentregelung, beendet und
in den Abbremsmode gewechselt;
welcher in weiteren, sich periodisch wiederholenden Schritten:
einer ersten Leitungszeit (t₁-t₂) mit einem Antriebsmoment sowie zeitlich versetzt dazu einer zweiten Leitungszeit (t₃-t₄) mit einem Bremsmoment derart generiert wird, dass diese über die Phasenperiodendauer (T) gemittelt ein resultierendes Bremsmoment erzeugen.

3. Steuerverfahren nach Anspruch 1 oder 2, **dadurch gekennzeichnet, dass** in einer höher priorisierten Regelschleife während des Abbremsmodus die sich durch die Wicklung integral verzögert einstellende Stromstärke (I) innerhalb der Leitungszeit (t₁-t₂, t₃-t₄) durch eine Strombegrenzung auf einen Stromgrenzwert (Iₘᵢₙ, Iₘₐₓ) begrenzt wird, indem die Leitungszeit (t₁-t₂, t₃-t₄) unterbrochen wird.

4. Steuerverfahren nach einem der vorherigen Ansprüche, **dadurch gekennzeichnet, dass** während der motorischen Leitungszeit (t₁-t₂) und während der generatorischen Leitungszeit (t₃-t₄) ein unterschiedlicher Stromgrenzwert (Iₘᵢₙ; Iₘₐₓ) zur Strombegrenzung benutzt wird und dass optional nur der betraglich kleine Stromgrenzwert (Iₘᵢₙ) als Parameter zur Regelung benutzt wird.

5. Steuerverfahren nach einem der vorherigen Ansprüche, **dadurch gekennzeichnet, dass** bei Vorhandensein eines Zwischenkreises in einer über der Strombegrenzung priorisierten Regelschleife während des Abbremsmodus die sich durch die Induktion integral verzögert aufbauende Zwischenkreisspannung (U) auf einen zulässigen Spannungsgrenzwert (Uₘₐₓ) begrenzt wird, indem innerhalb des generatorischen Leitungszeit (t₃-t₄) durch eine Strombegrenzung auf den als Steuerparameter benutzten betraglich kleineren Stromgrenzwert (Iₘᵢₙ) über einen, optional kontinuierlichen, Spannungsregler (8) die Zwischenkreisspannung (U) begrenzt wird.

## Claims

1. Control method for braking an electronically commutated electric motor (4) with an inverter (7) controlled by a microcontroller, in which the inverter (7) is operated sequentially both in the motor and in the generator operating mode with conduction times (t1-t2, t3-t4) different from zero with reference to at least one winding within a phase period duration (T), in which the driving or braking torques allocated to the conduction times (t1-t2, t3-t4), averaged over the phase period duration (T), produce a resulting braking torque,
**characterised in that** during the braking mode at higher speeds the electric motor (4) made as a reluctance motor is operated in a continuous current mode with individual conduction times (t1-t2, t3-t4) over a half phase period duration (T), in which the motor and generator conduction times (t1-t2; t3-t4) follow each other without a gap in time.

2. Control method according to claim 1, **characterised in that** the microcontroller and the inverter (7) connected to it for braking the electric motor (4)
in a first step:
detect the change in the braking mode, optionally switching off by the user;
in a second step:
end the normal motor mode, optionally with speed and/or torque regulation, and change to braking mode;
which in further periodically repeating steps:
generate a first conduction time (t1-t2) with a driving torque and a second conduction time (t3-t4) with a braking torque offset to it in time in such a way that, averaged over the phase period duration (T), they produce a resulting braking torque.

3. Control method according to claim 1 or 2, **characterised in that** in a higher prioritised control loop during the braking mode the current intensity (I) being set integrally delayed through the winding is limited through a current limit to a current limit value (Imin, Imax) within the conduction time (t1-t2, t3-t4), in which the conduction time (t1-t2, t3-t4) is interrupted.

4. Control method according to one of the previous claims, **characterised in that** during the motor conduction time (t1-t2) and during the generator conduction time (t3-t4) a different current limit value (Imin; Imax) is used for the current limit and that optionally only the small current limit value (Imin) is used as the parameter for regulation.

5. Control method according to one of the previous claims, **characterised in that** in the presence of an intermediate circuit in a control loop prioritised through the current limit during the braking mode the intermediate circuit voltage (U) building up integrally delayed through induction is limited to an admissible voltage limit value (Umax), in which the intermediate circuit voltage (U) is limited through a current limit to the smaller current limit value (Imln) used as the control parameter through an optionally continuous voltage regulator (8) within the generator conduction time (t3-t4).

## Revendications

1. Procédé de commande pour freiner un moteur électrique à commutation électronique (4) en utilisant un onduleur (7) commandé par un microcontrôleur, dans lequel sur une période de phase (T), l'onduleur (7) fonctionne séquentiellement par rapport à au moins un enroulement aussi bien en mode de fonctionnement moteur qu'en mode de fonctionnement générateur avec des temps de cycle (t₁-t₂, t₃-t₄) non nuls, dans lequel les couples d'entraînement ou de freinage associés aux temps de cycle (t₁-t₂, t₃-t₄) génèrent un couple de freinage résultant dont la moyenne est calculée sur la période de phase (T),
**caractérisé en ce qu'**en mode de freinage avec une vitesse de rotation plus élevée, le moteur électrique (4) configuré comme un moteur à réluctance fonctionne dans un régime de fonctionnement à courant continu avec des temps de cycle (t₁-t₂, t₃-t₄) individuels sur une demie période de phase (T), les temps de cycle (t₁-t₂, t₃-t₄) moteur et générateur se suivant l'un l'autre de manière non interrompue dans le temps.

2. Procédé de commande selon la revendication 1, caractérisé en que pour freiner le moteur électrique (4), le microcontrôleur et l'onduleur (7) relié à celui-ci exécutent une première étape consistant à :
détecter le basculement sur le mode de freinage, facultativement l'arrêt par l'utilisateur,
une deuxième étape consistant à :
mettre fin au mode moteur actuel, facultativement avec une régulation de la vitesse de rotation et/ou du couple et basculer sur le mode de freinage,
des étapes supplémentaires se répétant périodiquement et consistant à :
générer un premier temps de cycle (t₁-t₂) avec un moment d'entraînement, ainsi qu'un second temps de cycle (t₃-t₄) retardé dans le temps par rapport à celui-ci avec un couple de freinage, de telle sorte que ceux-ci génèrent un couple de freinage résultant dont la moyenne est calculée sur la période de phase (T).

3. Procédé de commande selon la revendication 1 ou 2, **caractérisé en ce que** dans une boucle de régulation à priorité plus élevée pendant le mode de freinage, l'intensité du courant (I) régulée de manière intégralement retardée par l'enroulement est limitée à une valeur limite de courant (Iₘᵢₙ ; Iₘₐₓ) sur le temps de cycle (t₁-t₂, t₃-t₄) par un limiteur de courant, en interrompant le temps de cycle (t₁-t₂, t₃-t₄) .

4. Procédé de commande selon l'une des revendications précédentes, **caractérisé en ce que** pendant le temps de cycle moteur (t₁-t₂) et pendant le temps de cycle générateur (t₃-t₄), une valeur limite de courant différente (Iₘᵢₙ ; Iₘₐₓ) est utilisée pour le limiteur de courant, et **en ce que**, facultativement, seule la valeur limite de courant quantitativement faible (Iₘᵢₙ) est utilisée comme paramètre de régulation.

5. Procédé de commande selon l'une des revendications précédentes, **caractérisé en ce qu'**en cas de présence d'un circuit intermédiaire dans une boucle de régulation prioritaire sur le limiteur de courant, pendant le mode de freinage, la tension de circuit intermédiaire (U) obtenue par induction de manière intégralement retardée est limitée à une valeur limite de tension admissible (Uₘₐₓ), en limitant ainsi sur le temps de cycle générateur (t₃-t₄), par un limiteur de courant, la tension du circuit intermédiaire (U) à la valeur limite de courant (Iₘᵢₙ) quantitativement moins élevée et utilisée comme paramètre de commande, via un régulateur de tension (8) facultativement continu.
